# EUROPEAN PATENT APPLICATION

(11) **EP 2 706 531 A1**
(43) Date of publication of application: **12.03.2014**
(21) Application number: 13182937.6
(22) Date of filing: 04.09.2013
(51) Int. Cl.: G11B 27/034, G11B 27/28, G11B 27/11, G11B 27/10

(54) **An image enhancement apparatus**

(30) Priority: 11.09.2012 IN CH37742012
(71) Applicant: Nokia Corporation, 02150 Espoo (FI)
(72) Inventor: Kannan, Rajeswari, 560066 Bangalore (IN); Shenoy, Ravi, 560098 Karnataka (IN); Patwardhan, Pushkar Prasad, 400601 Maharashtra (IN)
(74) Representative: Nokia Corporation

(57) **Abstract**

A method is provided, comprising: analysing at least two images to determine at least one object mutual to the at least two images, the object having a periodicity of motion; generating an animated image based on the at least two images, wherein the at least one object is animated; determining at least one audio signal associated with the at least one object; and combining the at least one audio signal with the animated image to generate an audio enabled animated image.

## Description

### FIELD

The present invention relates to a providing additional functionality for images. The invention further relates to, but is not limited to, display apparatus providing additional functionality for images displayed in mobile devices.

### BACKGROUND

Many portable devices, for example mobile telephones, are equipped with a display such as a glass or plastic display window for providing information to the user. Furthermore such display windows are now commonly used as touch sensitive inputs. In some further devices the device is equipped with transducers suitable for generating audible feedback.

Images and animated images are known. Animated images or cinemagraph images can provide the illusion that the view is watching a video. The cinemagraph are typically still photographs in which a minor and repeated movement occurs. These are particularly useful as they can be transferred or transmitted between devices using significantly smaller bandwidth than conventional video.

### STATEMENT

According to an aspect, there is provided a method comprising: analysing at least two images to determine at least one object mutual to the at least two images, the object having a periodicity of motion; generating an animated image based on the at least two images, wherein the at least one object is animated; determining at least one audio signal associated with the at least one object; and combining the at least one audio signal with the animated image to generate an audio enabled animated image.

Determining at least one audio signal associated with the at least one object may comprise: receiving the at least one audio signal, wherein at least a portion of the at least one audio signal was captured at substantially the same time as the at least two images; and filtering the at least one audio signal.

Receiving the at least one audio signal may comprise receiving the at least one audio signal from at least one microphone.

Filtering the at least one audio signal may comprise: determining at least one foreground sound source of the at least one audio signal; filtering the at least one audio signal to remove the at least one foreground sound source from the at least one audio signal to generate an ambience audio signal as the at least one audio signal associated with the at least one object.

Filtering the at least one audio signal to select at least a portion of the at least one audio signal may comprise: determining at least one foreground sound source of the at least one audio signal; filtering the at least one audio signal to extract the at least one foreground sound source from the at least one audio signal to generate an at least one foreground sound source audio signal as the at least one audio signal associated with the at least one object.

Determining at least one audio signal associated with the at least one object may comprise: receiving an indication of the at least one object mutual to the at least two images; identifying the at least one object mutual to the at least two images; and generating the at least one audio signal based on the identified object.

Identifying the at least one object may comprise: determining a location associated with of the at least two images; identifying at least one object based on the location of the at least two images; selecting at least one of the at least one object.

Identifying the at least one object may comprise pattern recognition analysing the at least one object mutual to the at least two images to identify the object.

Determining at least one audio signal associated with the at least one object may comprise at least one of: receiving the at least one audio signal from an external audio database; receiving the at least one audio signal from an internal audio database; receiving the at least one audio signal from a memory; and synthesising the at least one audio signal.

The method may further comprise: generating an audio flow model to control the presentation of the audio signal; and processing the at least one audio signal using the audio flow model.

Generating the audio flow model may comprise: determining an audio signal tone; determining an audio signal volume; determining an audio signal playback speed; determining an audio signal repetition periodicity; determining an audio signal start; and determining an audio signal end.

The method may further comprise time synchronising the at least one audio signal with the animated image to generate a synchronised audio enabled animated image.

Analysing at least two images to determine at least one object mutual to the at least two images, the object having a periodicity of motion may further comprise: receiving the at least two images from an image source; outputting the at least two images on a display; and receiving at least one user input determining the at least one object mutual to the at least two images.

Analysing at least two images to determine at least one object mutual to the at least two images, the object having a periodicity of motion may further comprise: correlating the at least two images to determine at least one candidate object, the at least one candidate object being mutual the at least two images and having a periodicity of motion; and selecting at least one of the at least one candidate object as the at least one object.

An apparatus may be configured to perform the method as described herein.

A computer program product comprising program instructions may cause an apparatus to perform the method as described herein.
A method may be substantially as herein described and illustrated in the accompanying drawings.
An apparatus may be substantially as herein described and illustrated in the accompanying drawings.

According to a second aspect there is provided apparatus comprising at least one processor and at least one memory including computer code for one or more programs, the at least one memory and the computer code configured to with the at least one processor cause the apparatus to at least perform: analyse at least two images to determine at least one object mutual to the at least two images, the object having a periodicity of motion; generate an animated image based on the at least two images, wherein the at least one object is animated; determine at least one audio signal associated with the at least one object; and combine the at least one audio signal with the animated image to generate an audio enabled animated image.

Determining at least one audio signal associated with the at least one object may cause the apparatus to perform: receive the at least one audio signal, wherein at least a portion of the at least one audio signal was captured at substantially the same time as the at least two images; and filter the at least one audio signal.

Receiving the at least one audio signal may cause the apparatus to perform receive the at least one audio signal from at least one microphone.

Filtering the at least one audio signal may cause the apparatus to perform: determine at least one foreground sound source of the at least one audio signal; filter the at least one audio signal to remove the at least one foreground sound source from the at least one audio signal to generate an ambience audio signal as the at least one audio signal associated with the at least one object.

Filtering the at least one audio signal to select at least a portion of the at least one audio signal may cause the apparatus to perform: determine at least one foreground sound source of the at least one audio signal; filter the at least one audio signal to extract the at least one foreground sound source from the at least one audio signal to generate an at least one foreground sound source audio signal as the at least one audio signal associated with the at least one object.

Determining at least one audio signal associated with the at least one object may cause the apparatus to perform: receive an indication of the at least one object mutual to the at least two images; identify the at least one object mutual to the at least two images; and generate the at least one audio signal based on the identified object.

Identifying the at least one object may cause the apparatus to perform: determine a location associated with of the at least two images; identify at least one object based on the location of the at least two images; select at least one of the at least one object.

Identifying the at least one object may cause the apparatus to perform pattern recognition analysis of the at least one object mutual to the at least two images to identify the object.

Determining at least one audio signal associated with the at least one object may cause the apparatus to perform at least one of: receive the at least one audio signal from an external audio database; receive the at least one audio signal from an internal audio database; receive the at least one audio signal from a memory; and synthesis of the at least one audio signal.

The apparatus may further be caused to perform: generate an audio flow model to control the presentation of the audio signal; and process the at least one audio signal using the audio flow model.

Generating the audio flow model may cause the apparatus to perform: determine an audio signal tone; determine an audio signal volume; determine an audio signal playback speed; determine an audio signal repetition periodicity; determine an audio signal start; and determine an audio signal end.

The apparatus may be caused to perform time synchronisation of the at least one audio signal with the animated image to generate a synchronised audio enabled animated image.

Analysing at least two images to determine at least one object mutual to the at least two images, the object having a periodicity of motion may further cause the apparatus to perform: receive the at least two images from an image source; output the at least two images on a display; and receive at least one user input determining the at least one object mutual to the at least two images.

Analysing at least two images to determine at least one object mutual to the at least two images, the object having a periodicity of motion may further cause the apparatus to perform: correlate the at least two images to determine at least one candidate object, the at least one candidate object being mutual the at least two images and having a periodicity of motion; and select at least one of the at least one candidate object as the at least one object.

According to third aspect there is provided an apparatus comprising: means for analysing at least two images to determine at least one object mutual to the at least two images, the object having a periodicity of motion; means for generating an animated image based on the at least two images, wherein the at least one object is animated; means for determining at least one audio signal associated with the at least one object; and means for combining the at least one audio signal with the animated image to generate an audio enabled animated image.

The means for determining at least one audio signal associated with the at least one object may comprise: means for receiving the at least one audio signal, wherein at least a portion of the at least one audio signal was captured at substantially the same time as the at least two images; and means for filtering the at least one audio signal.

The means for receiving the at least one audio signal may comprise means for receiving the at least one audio signal from at least one microphone.

The means for filtering the at least one audio signal may comprise: means for determining at least one foreground sound source of the at least one audio signal; means for filtering the at least one audio signal to remove the at least one foreground sound source from the at least one audio signal to generate an ambience audio signal as the at least one audio signal associated with the at least one object.

The means for filtering the at least one audio signal to select at least a portion of the at least one audio signal may comprise: means for determining at least one foreground sound source of the at least one audio signal; filtering the at least one audio signal to extract the at least one foreground sound source from the at least one audio signal to generate an at least one foreground sound source audio signal as the at least one audio signal associated with the at least one object.

The means for determining at least one audio signal associated with the at least one object may comprise: means for receiving an indication of the at least one object mutual to the at least two images; means for identifying the at least one object mutual to the at least two images; and means for generating the at least one audio signal based on the identified object.

The means for identifying the at least one object may comprise: means for determining a location associated with of the at least two images; means for identifying at least one object based on the location of the at least two images; means for selecting at least one of the at least one object.

The means for identifying the at least one object may comprise means for pattern recognition analysing the at least one object mutual to the at least two images to identify the object.

The means for determining at least one audio signal associated with the at least one object may comprise at least one of: means for receiving the at least one audio signal from an external audio database; means for receiving the at least one audio signal from an internal audio database; means for receiving the at least one audio signal from a memory; and means for synthesising the at least one audio signal.

The apparatus may further comprise: means for generating an audio flow model to control the presentation of the audio signal; and means for processing the at least one audio signal using the audio flow model.

The means for generating the audio flow model may comprise: means for determining an audio signal tone; means for determining an audio signal volume; means for determining an audio signal playback speed; means for determining an audio signal repetition periodicity; means for determining an audio signal start; and means for determining an audio signal end.

The apparatus may further comprise means for time synchronising the at least one audio signal with the animated image to generate a synchronised audio enabled animated image.

The means for analysing at least two images to determine at least one object mutual to the at least two images, the object having a periodicity of motion may further comprise: means for receiving the at least two images from an image source; means for outputting the at least two images on a display; and means for receiving at least one user input determining the at least one object mutual to the at least two images.

The means for analysing at least two images to determine at least one object mutual to the at least two images, the object having a periodicity of motion may further comprise: means for correlating the at least two images to determine at least one candidate object, the at least one candidate object being mutual the at least two images and having a periodicity of motion; and means for selecting at least one of the at least one candidate object as the at least one object.

According to a fourth aspect there is provided an apparatus comprising: an analyser configured to analyse at least two images to determine at least one object mutual to the at least two images, the object having a periodicity of motion; a generator configured to generate an animated image based on the at least two images, wherein the at least one object is animated; an audio clip generator configured to determine at least one audio signal associated with the at least one object; and a combiner configured to combine the at least one audio signal with the animated image to generate an audio enabled animated image.

The audio clip generator may comprise: an input configured to receive the at least one audio signal, wherein at least a portion of the at least one audio signal was captured at substantially the same time as the at least two images; and a filter configured to filter the at least one audio signal.

The input may comprise a microphone input configured to receive the at least one audio signal from at least one microphone.

The filter may comprise: an intrinsic audio signal analyser configured to determine at least one foreground sound source of the at least one audio signal; and further configured to filter the at least one audio signal to remove the at least one foreground sound source from the at least one audio signal to generate an ambience audio signal as the at least one audio signal associated with the at least one object.

The filter may comprise: an intrinsic audio signal analyser configured to determine at least one foreground sound source of the at least one audio signal; and further configured to filter the at least one audio signal to extract the at least one foreground sound source from the at least one audio signal to generate an at least one foreground sound source audio signal as the at least one audio signal associated with the at least one object.

The audio clip generator may comprise: a synthetic audio generator configured to receive an indication of the at least one object mutual to the at least two images; configured to identify the at least one object mutual to the at least two images; and further configured to generate the at least one audio signal based on the identified object.

The synthetic audio generator configured to identify the at least one object may comprise: a location estimator configured to determine a location associated with of the at least two images; an object identifier configured to identify at least one object based on the location of the at least two images; and an object selector configured to select at least one of the at least one object.

The synthetic audio generator configured to identify the at least one object may comprise a pattern recognition analyser configured to pattern recognise the at least one object mutual to the at least two images to identify the object.

The synthetic audio generator may comprise at least one of: an input configured to receive the at least one audio signal from an external audio database; an input configured to receive the at least one audio signal from an internal audio database; an input configured to receive the at least one audio signal from a memory; and a synthesiser configured to synthesise the at least one audio signal.

The apparatus may further comprise: an audio clip embedder configured to generate an audio flow model to control the presentation of the audio signal; and configured to process the at least one audio signal using the audio flow model.

The audio clip embedder configured to generate the audio flow model may be configured to: determine an audio signal tone; determine an audio signal volume; determine an audio signal playback speed; determine an audio signal repetition periodicity; determine an audio signal start; and determine an audio signal end.

The apparatus may further comprise a synchroniser configured to time synchronise the at least one audio signal with the animated image to generate a synchronised audio enabled animated image.

The analyser may comprise: an input configured to receive the at least two images from an image source; an input configured to output the at least two images on a display; and a user interface input configured to receive at least one user input determining the at least one object mutual to the at least two images.

The analyser may comprise: a correlator configured to correlate the at least two images to determine at least one candidate object, the at least one candidate object being mutual the at least two images and having a periodicity of motion; and a selector configured to select at least one of the at least one candidate object as the at least one object.

A computer program product stored on a medium for causing an apparatus to may perform the method as described herein.

An electronic device may comprise apparatus as described herein.

A chipset may comprise apparatus as described herein.

### Summary of Figures

For better understanding of the present invention, reference will now be made by way of example to the accompanying drawings in which:
Figure 1 shows schematically an apparatus suitable for employing some embodiments;
Figure 2 shows schematically an example audio enhanced cinemagraph generator;
Figure 3 shows schematically a video/image analyser as shown in Figure 2 according to some embodiments;
Figure 4 shows a flow diagram of the operation of the video/image analyser as shown in

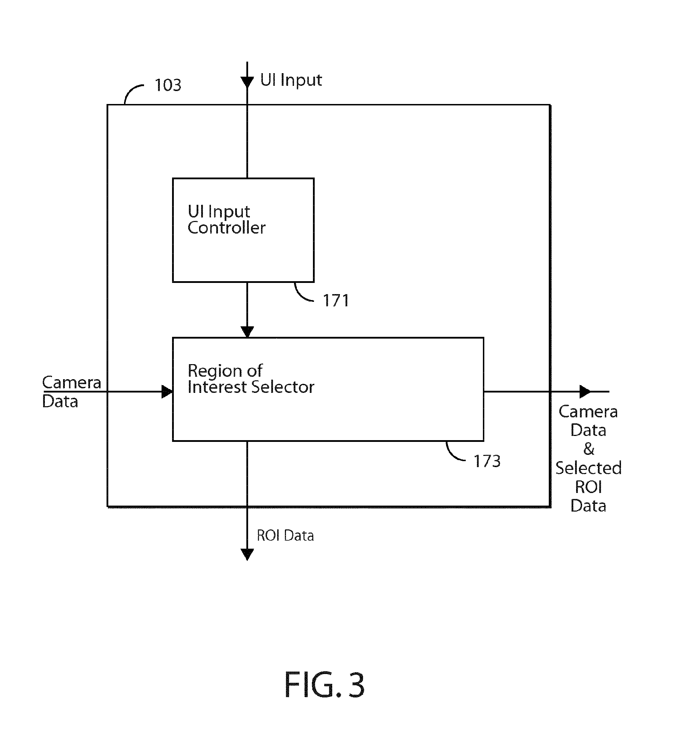

Figure 3 according to some embodiments;

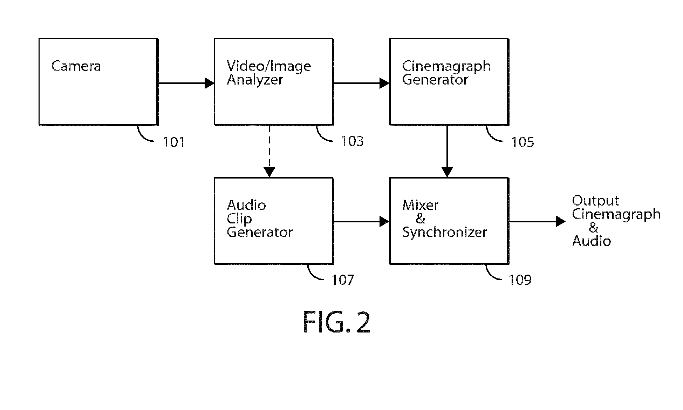

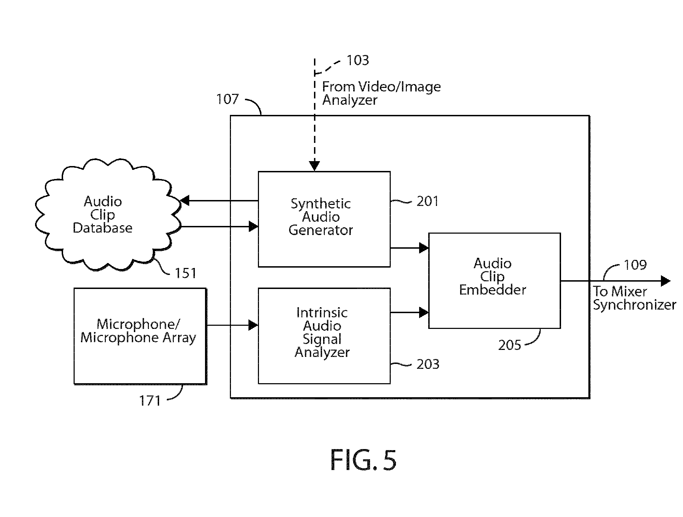

Figure 5 shows schematically an audio clip generator as shown in Figure 2 according to some embodiments;

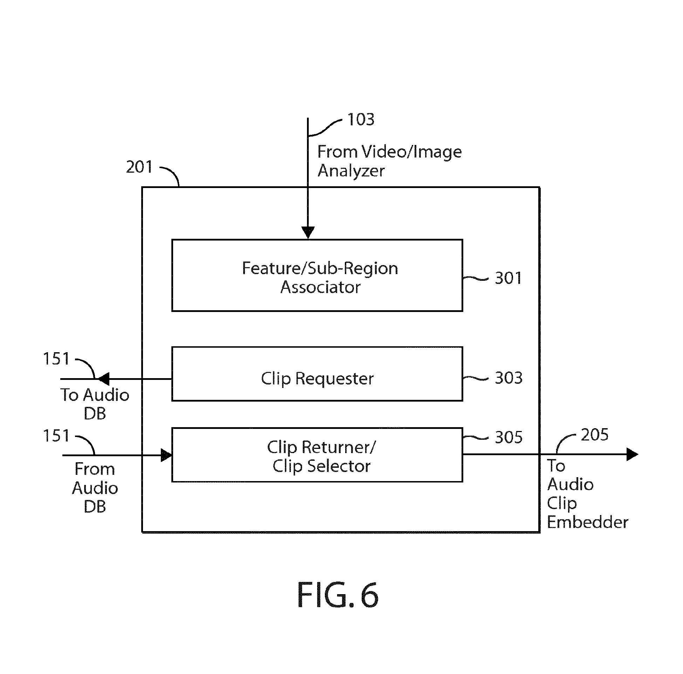

Figure 6 shows schematically a synthetic audio generator as shown in Figure 5 according to some embodiments;

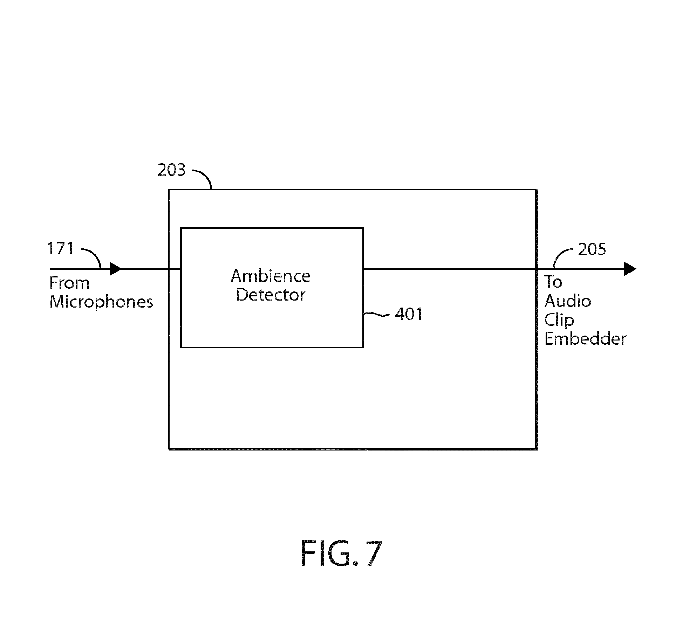

Figure 7 shows schematically an intrinsic audio signal analyser as shown in Figure 5 according to some embodiments;

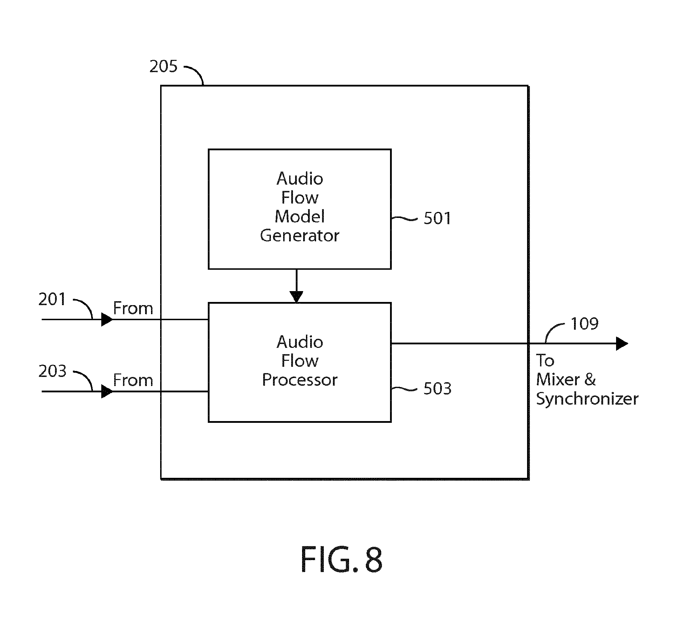

Figure 8 shows schematically an audio clip embedder as shown in Figure 5 according to some embodiments;

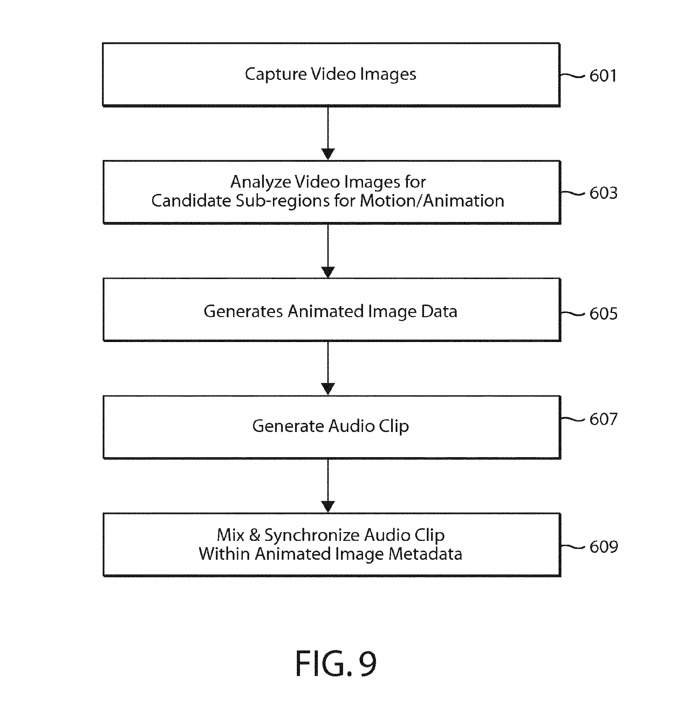

Figure 9 shows a flow diagram of the operation of the audio enhanced cinemagraphs generator as shown in Figure 2 according to some embodiments;

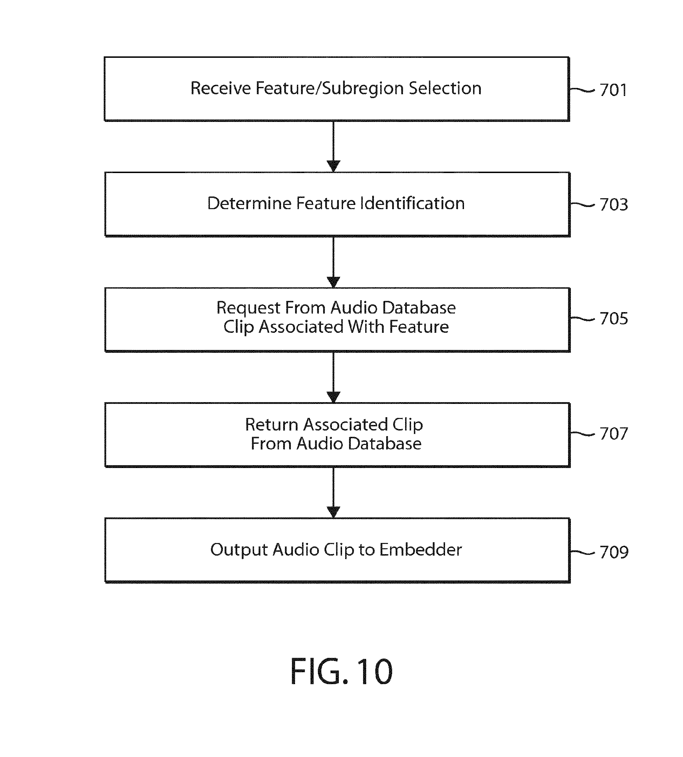

Figure 10 shows a flow diagram of the operation of the synthetic audio generator as shown in Figure 6 according to some embodiments;

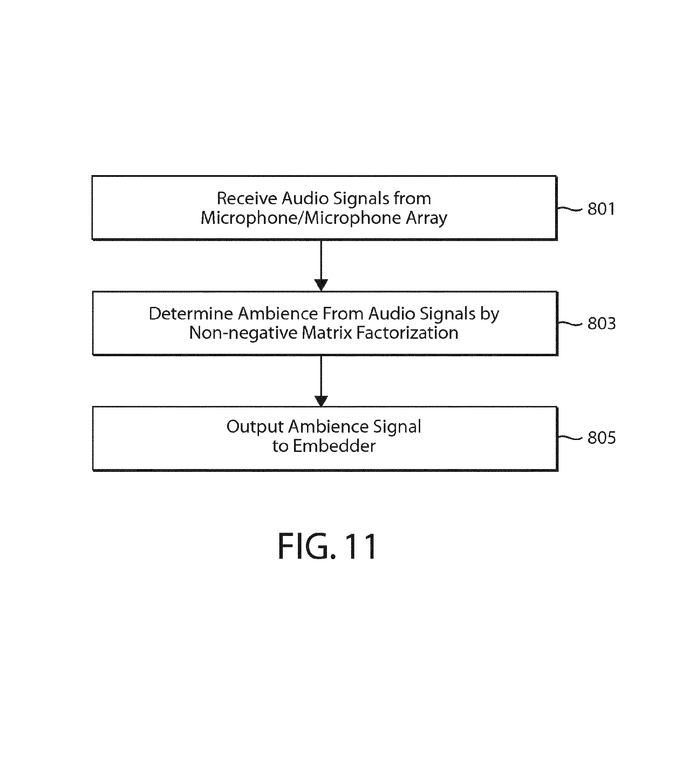

Figure 11 shows a flow diagram of the operation of the intrinsic audio signal analyser as shown in Figure 7 according to some embodiments;

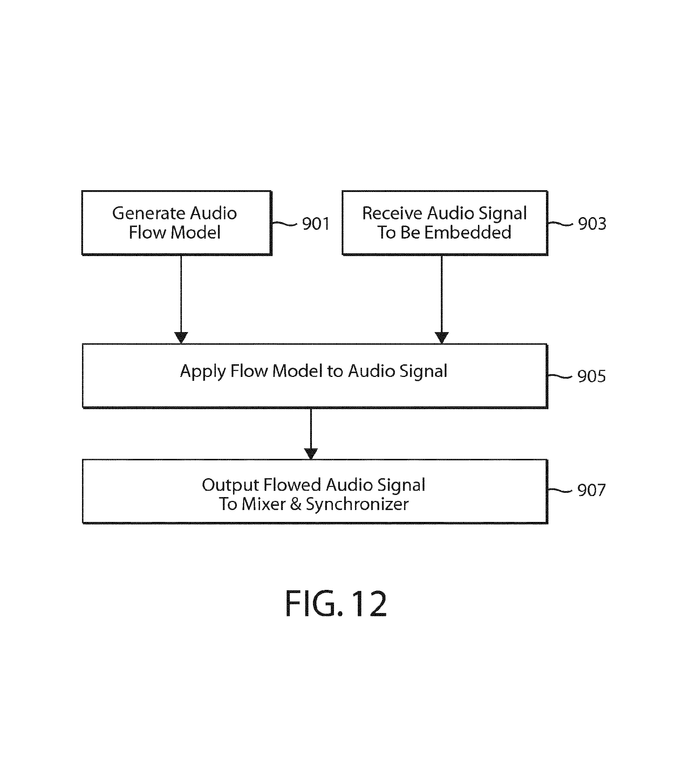

Figure 12 shows a flow diagram of the operation of the audio clip embedder as shown in
Figure 8 according to some embodiments;

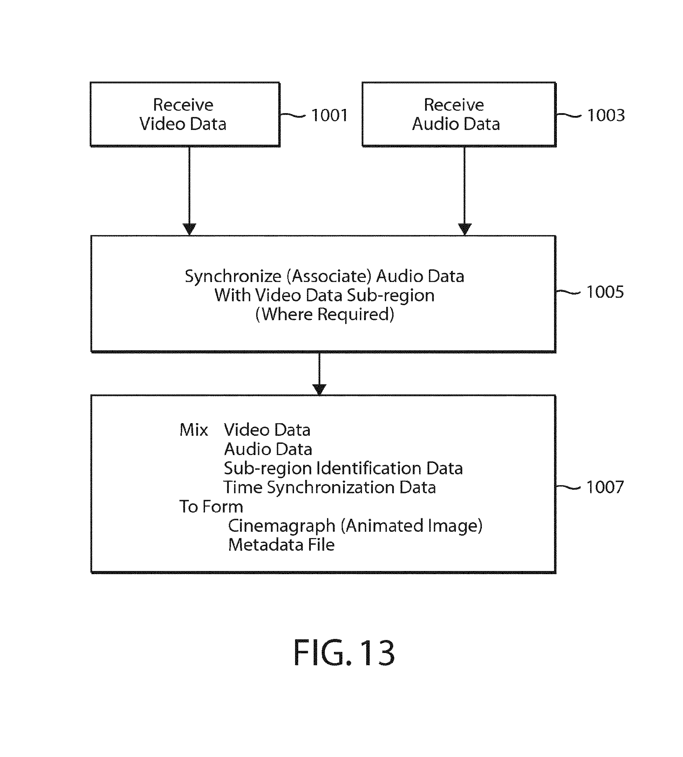

Figure 13 shows a flow diagram of the operation of the mixer and synchroniser as shown in
Figure 2 according to some embodiments;

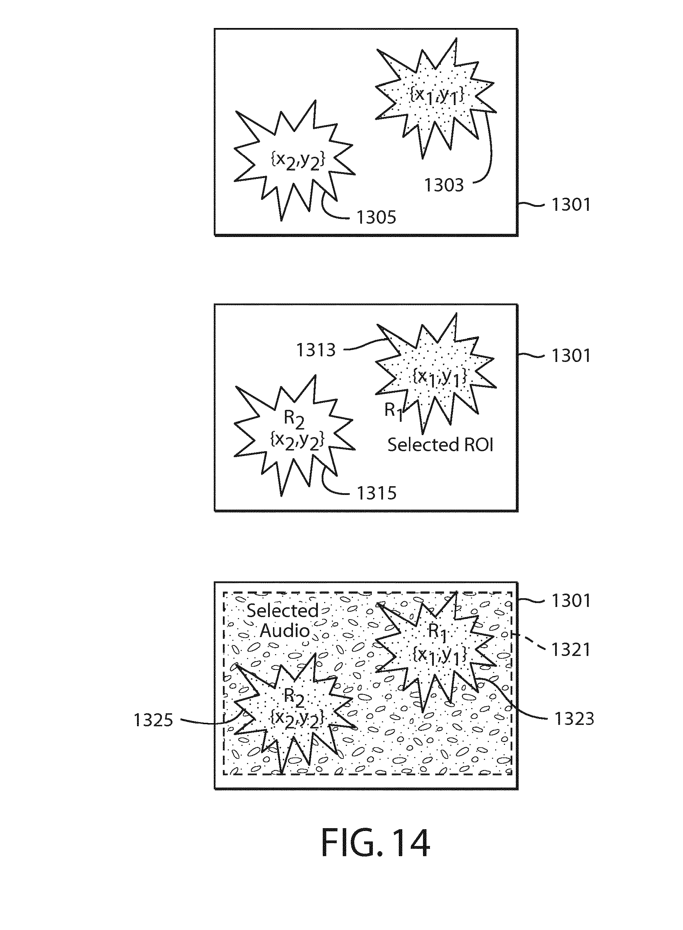

Figure 14 shows example sub region selection for region of interest within images according to some embodiments; and

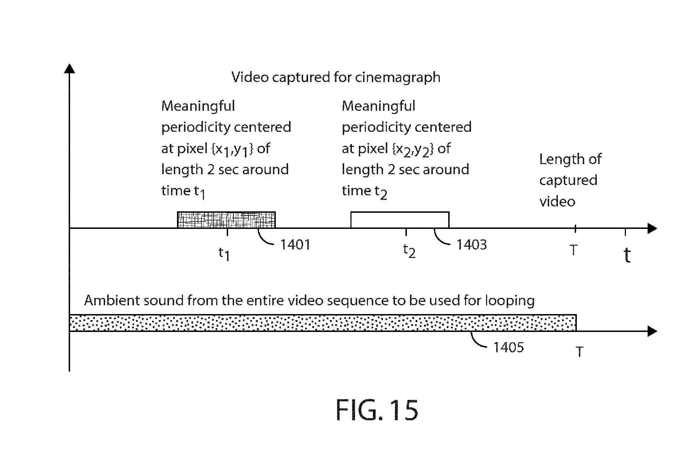

Figure 15 shows an example time plan of video and audio forming an audio enhanced cinemagraph according to some embodiments.

### Description of Example Embodiments

The concept of embodiments of the application is to combine audio signals to cinemagraphs (animated images) during the generation of cinemagraphs or animated images. This can be implemented in the example shown herein by generating and embedding metadata including audio effect signals or links to the audio effect signal using at least one of intrinsic and synthetic audio signals in such a manner that the generated cinemagraph is enhanced by the audio effect.

High quality photographs and videos are known to provide a great way to relive an experience. Cinemagraphs or animated images are seen as an extension of a photograph and produced using postproduction techniques. The cinemagraph provides a means to enable motion of an object common between images or in a region of an otherwise still or static picture. For example the design or aesthetic element allows subtle motion elements while the rest of the image is still. In some cinemagraphs the motion or animation feature is repeated. In the following description and claims the term object, common object, or subject can be considered to refer to any element, object or component which is shared (or mutual) across the images used to create the cinemagraph or animated object. For example the images used as an input could be a video of a moving toy train against a substantially static background. In such an example the object, subject, common object, region, or element can be the toy train which in the animated image provides the dynamic or subtle motion element whilst the rest of the image is still. It would be understood that whether the object or subject is common does not necessarily that the object, subject, or element is substantially identical from frame to frame. However typically there is a large degree of correlation between subsequent image objects as the object moves or appears to move. For example the object or subject of the toy train can appear to move to and from the observer from frame to frame in such a way that the train appears to get larger/smaller or the toy train appears to turn away from or to the observer by the toy train profile changing.

In other words the size, shape and position of the region of the image identified as the subject, object or element can change from image to image, however within the image is a selected entity which from frame to frame has a degree of correlation (as compared to the static image components which have substantially perfect correlation from frame to frame).

A Cinemagraph can in some ways be seen as a potential natural progression of image viewing from greyscale (black and white photography) to colour, colour to high-resolution colour images, fully static to regional motion within the photograph. However reliving an experience can be seen as being incomplete without audio, and cinemagraphs at present cannot render audio.

The problem therefore is how to generate a cinemagraph or animated image such that the audio can be associated with it.

Typically a cinemagraph (or motion photograph or animated image) is constructed from a video sequence, in which audio is likely to be available or associated with it. However when attempting to try to tie the audio in the motion photograph, the recorded audio in the scene as a whole cannot be tied to the motion image, rather the attached audio should be selected and processed selectively. For example one cannot repeat an audio clip (similar to adding motion to subregions on the image) as it would become irritating.

Another problem associated with adding audio is that a repeating a certain audio sequence can produce an unnatural example where two people are conversing in dialogue. For example it would be unnatural for the repetition of the audio clip ("Hi Ravi how are you?") again and again therefore it would be understood that there is a class or section of audio clips or audio signals that can be repeated or looped and a class or selection of audio which should not be repeated but played only once even where the image motion is looped.

A further problem in associating audio with video images in cinemagraphs or animated images where looping is employed is accurately looping audio signals or audio clips. For example a looped or replayed audio signal can jerk or pause while it is repeated which would lead to an unnatural or disturbing experience.

It would be understood that a cinemagraph can normally be understood to have a repeatable, subtle, motion element (or subject or object) however in some situations the audio can be attached to non-repeatable object or motion element within an animated image or photograph. For example adding a lightning/thunder sound to a motion photograph. Similarly in some embodiments the audio clip or signal can be a single instance play element within a visual motion element animated scene. In the following examples motion photography, or cinemagraph can be considered to cover all combinations or single or repeatable image motion and audio clip playback.

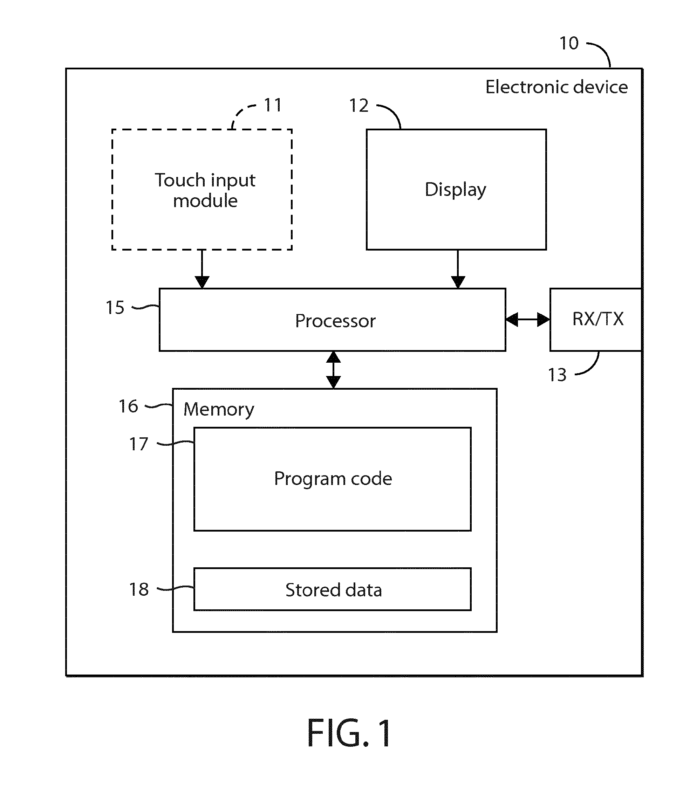

With respect to Figure 1 a schematic block diagram of an example electronic device 10 or apparatus on which embodiments of the application can be implemented. The apparatus 10 is such embodiments configured to provide improved image experiences.

The apparatus 10 is in some embodiments a mobile terminal, mobile phone or user equipment for operation in a wireless communication system. In other embodiments, the apparatus is any suitable electronic device configured to process video and audio data. In some embodiments the apparatus is configured to provide an image display, such as for example a digital camera, a portable audio player (mp3 player), a portable video player (mp4 player). In other embodiments the apparatus can be any suitable electronic device with touch interface (which may or may not display information) such as a touch-screen or touch-pad configured to provide feedback when the touch-screen or touch-pad is touched. For example in some embodiments the touch-pad can be a touch-sensitive keypad which can in some embodiments have no markings on it and in other embodiments have physical markings or designations on the front window. The user can in such embodiments be notified of where to touch by a physical identifier - such as a raised profile, or a printed layer which can be illuminated by a light guide.

The apparatus 10 comprises a touch input module or user interface 11, which is linked to a processor 15. The processor 15 is further linked to a display 12. The processor 15 is further linked to a transceiver (TX/RX) 13 and to a memory 16.

In some embodiments, the touch input module 11 and/or the display 12 are separate or separable from the electronic device and the processor receives signals from the touch input module 11 and/or transmits and signals to the display 12 via the transceiver 13 or another suitable interface. Furthermore in some embodiments the touch input module 11 and display 12 are parts of the same component. In such embodiments the touch interface module 11 and display 12 can be referred to as the display part or touch display part.

The processor 15 can in some embodiments be configured to execute various program codes. The implemented program codes, in some embodiments can comprise such routines as audio signal parsing and decoding of image data, touch processing, input simulation, or tactile effect simulation code where the touch input module inputs are detected and processed, effect feedback signal generation where electrical signals are generated which when passed to a transducer can generate tactile or haptic feedback to the user of the apparatus, or actuator processing configured to generate an actuator signal for driving an actuator. The implemented program codes can in some embodiments be stored for example in the memory 16 and specifically within a program code section 17 of the memory 16 for retrieval by the processor 15 whenever needed. The memory 15 in some embodiments can further provide a section 18 for storing data, for example data that has been processed in accordance with the application, for example pseudo-audio signal data.

The touch input module 11 can in some embodiments implement any suitable touch screen interface technology. For example in some embodiments the touch screen interface can comprise a capacitive sensor configured to be sensitive to the presence of a finger above or on the touch screen interface. The capacitive sensor can comprise an insulator (for example glass or plastic), coated with a transparent conductor (for example indium tin oxide - ITO). As the human body is also a conductor, touching the surface of the screen results in a distortion of the local electrostatic field, measurable as a change in capacitance. Any suitable technology may be used to determine the location of the touch. The location can be passed to the processor which may calculate how the user's touch relates to the device. The insulator protects the conductive layer from dirt, dust or residue from the finger.

In some other embodiments the touch input module can be a resistive sensor comprising of several layers of which two are thin, metallic, electrically conductive layers separated by a narrow gap. When an object, such as a finger, presses down on a point on the panel's outer surface the two metallic layers become connected at that point: the panel then behaves as a pair of voltage dividers with connected outputs. This physical change therefore causes a change in the electrical current which is registered as a touch event and sent to the processor for processing.

In some other embodiments the touch input module can further determine a touch using technologies such as visual detection for example a camera either located below the surface or over the surface detecting the position of the finger or touching object, projected capacitance detection, infra-red detection, surface acoustic wave detection, dispersive signal technology, and acoustic pulse recognition. In some embodiments it would be understood that 'touch' can be defined by both physical contact and 'hover touch' where there is no physical contact with the sensor but the object located in close proximity with the sensor has an effect on the sensor.

The touch input module as described here is an example of a user interface input. It would be understood that in some other embodiments any other suitable user interface input can be employed to provide an user interface input, for example to select an item, object, or region from a displayed screen. In some embodiments the user interface input can thus be a keyboard, mouse, keypad, joystick or any suitable pointer device.

The apparatus 10 can in some embodiments be capable of implementing the processing techniques at least partially in hardware, in other words the processing carried out by the processor 15 may be implemented at least partially in hardware without the need of software or firmware to operate the hardware.

The transceiver 13 in some embodiments enables communication with other electronic devices, for example in some embodiments via a wireless communication network.

The display 12 may comprise any suitable display technology. For example the display element can be located below the touch input module and project an image through the touch input module to be viewed by the user. The display 12 can employ any suitable display technology such as liquid crystal display (LCD), light emitting diodes (LED), organic light emitting diodes (OLED), plasma display cells, Field emission display (FED), surface-conduction electron-emitter displays (SED), and Electrophoretic displays (also known as electronic paper, e-paper or electronic ink displays). In some embodiments the display 12 employs one of the display technologies projected using a light guide to the display window.

With respect to Figure 2 an example audio enhanced cinemagraph generator is shown. Furthermore with respect to Figure 9 the operation of the example audio enhanced cinemagraph generator as shown in Figure 2 is further described.

In some embodiments the audio enhanced cinemagraph generator comprises a camera 101. The camera 101 can be any suitable video or image capturing apparatus. The camera 101 can be configured to capture images and pass the image or video data to a video/image analyser 103.

The operation of capturing video images is shown in Figure 9 by step 601.

The example audio enhanced cinemagraph generator can in some embodiments comprise a video/image analyser 103. The video/image analyser 103 can be configured to receive the image or video data from the camera 101 and analyse the video images for candidate objects or sub-regions for motion/animation and audio mixing.

The output of the video/image analyser 103 in the form of video or image data and objects or sub-regions for candidate video motion selections can be passed to the cinemagraph generator 105. The video image analyser 103 can further be configured to output to the audio clip generator 107 data indicating candidate objects or sub-regions suitable for audio inserts.

In some embodiments the example audio enhanced cinemagraph generator comprises a cinemagraph generator 105. The cinemagraph generator 105 is configured to receive the video and any video motion selection data and generate a suitable cinemagraph data. In the following examples the cinemagraph generator is configured to generate animated image data however as described herein in some embodiments the animation can be subtle or missing from the image (in other words the image is substantially a static image). The cinemagraph generator 105 can be any suitable cinemagraph or animated image generating means configured to generate data in a suitable format which enables the cinemagraph viewer to generate the image with any motion elements. The cinemagraph generator 105 can be configured in some embodiments to output the generated cinemagraph data to a mixer and synchroniser 109.

The operation of generating the animated image data is shown in Figure 9 by step 605.

Furthermore in some embodiments the example audio enhanced cinemagraph generator comprises an audio clip generator 107. The audio clip generator 107 can be configured to generate an audio clip or audio signal component to be inserted or associated with the cinemagraph video or image data. In some embodiments the audio clip generator 107 can be configured to receive information from the video/image analyser 103 such that the audio clip generator 107 is configured to select an audio clip audio signal component based on the information passed by the video/image analyser 103.

The operation of generating the audio clip is shown in Figure 9 by step 607.

In some embodiments the apparatus comprises a mixer and synchroniser 109 configured to receive both the video images from the cinemagraph generator 105 and the audio signals from the audio clip generator 107 and configured to mix and synchronise signals in a suitable manner.

The mixer and synchroniser 109 can be configured in some embodiments to receive the video data from the cinemagraph generator 105 and the audio data or audio signal from the audio clip generator 107, mix the audio and video data and synchronise the audio and video data in such a form that the mixer and synchroniser 109 outputs an enhanced cinemagraph. In some embodiments the enhanced cinemagraph is a cinemagraph with metadata comprising the audio data (or link to an audio file) which is to be output alongside the image output.

The operation of mixing and synchronising the audio clip within the animated image data is shown in Figure 9 by step 609.

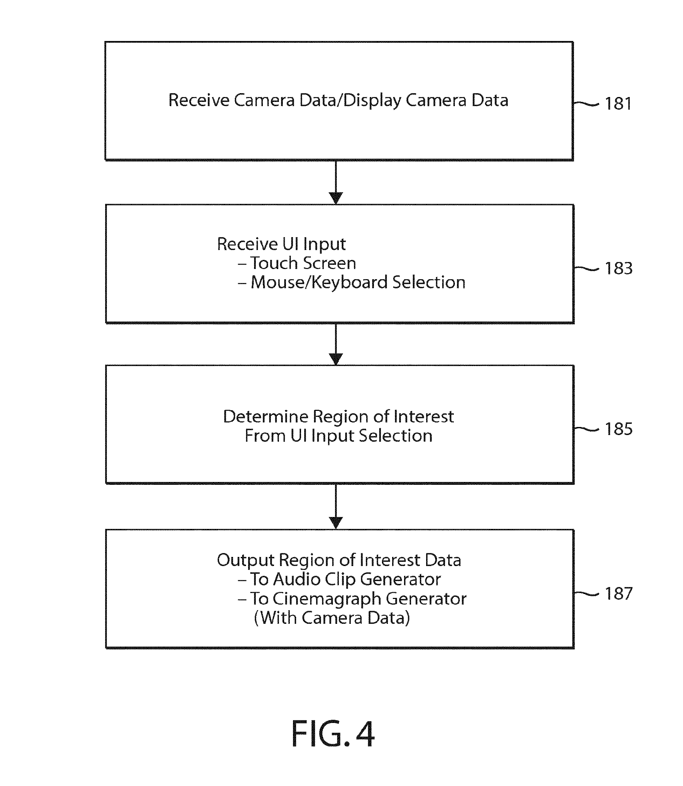

With respect to Figure 3 an example video/image analyser 103 is shown in further detail. Furthermore with respect to Figure 4 the operation of the video/image analyser 103 as shown in Figure 3 is described in further detail.

The video/image analyser 103 as described herein is configured to receive the video or image data from the camera and determine objects, regions or sub-regions which are selected as candidates for animation, in other words objects or sub-regions with a relevant periodicity. In some embodiments the video/image analyser 103 can be configured to identify image or video object or sub-region candidates for audio insertion. For example with respect to Figure 14, an example video image 1301 is shown with various candidate sub-regions being identified.

The top part of the figure shows the video image 1301 comprising a first object or region with a relevant periodicity in the video, region 1, which is centred at location X₁,Y₁ 1303 and a second object or region with a relevant periodicity in the video, region 2, which is centred at location X₂,Y₂ 1305.

In some embodiments the video/image analyser 103 can be configured to select one of the objects or regions as a candidate region (or a 'region of interest'). Thus as shown in the middle part of the figure the video/image analyser can select region 1 and region 2, shown as R₁, 1313, and R₂, 1315 respectively.

In some embodiments the video/image analyser 103 can be configured to select the whole of the image as a 'region of interest' with respect to audio clip insertion. Thus as shown in the bottom part of Figure 14 video/image analyser can be configured to select the whole of the image 1301 which comprises the selected video object or sub-regions, shown as R₁, 1323, R₂, 1325 and the audio selected region 1321.

In some embodiments these object or regions can be selected automatically using some sub-region selecting rule based selection, semi-automatically using some user input, or manually (in other words completely by the use of the user interface).

In some embodiments the video/image analyser 103 comprises a user interface input controller 171. The user interface input controller 171 can be configured to receive a user interface input, for example a touch screen interface or any suitable user interface input such as keyboard, keypad, mouse or any suitable pointer. The user interface input controller can be configured in some embodiments to determine from the user interface input a selection input and pass the selection input together with the location of the selection input to the region of interest selector 173. In some embodiments the user input controller is configured to operate as a user interface output, for example configured to output to a suitable touch screen display the video or image data from which the selection can be made.

The operation of receiving the camera data/displaying the camera data is shown in Figure 4 by step 181.

Furthermore the operation of receiving the user interface input is shown in Figure 4 by step 183.

In some embodiments the video/image analyser 103 comprises a region of interest selector 173. The region of interest selector 173 can be configured to receive the camera data and furthermore the user interface input controlled data and determine a object, sub-region or 'region of interest' from the user interface input selection.

In some embodiments the region of interest selector 173 operating automatically or semi-automatically can select any suitable object or sub-region of relevant periodicity within the video or image data. In other words the video or image data is monitored for a number of frames and a relevant periodicity within a object or region of the video image is identified and selected as a region of interest. These objects or 'region of interests' can be used to generate the motion parts of the cinemagraph, or in some embodiments to select the region providing an audio clip to be mixed with the image data.

The region of interest selector 173 can be configured to output the selected object or 'region of interest' data. Thus in some embodiments the region of interest selector 173 can be configured to output the selected object, sub-regions or 'region of interest' values to the audio clip generator 107 and together with the camera video or image data to the cinemagraph generator 105.

The operation of outputting region of interest data is shown in Figure 4 by step 187.

With respect to Figure 5 an example audio clip generator 107 is shown.

The audio clip generator 107 in some embodiments comprises a synthetic audio generator 201. The synthetic audio generator 201 can in some embodiments be configured to receive selected object, sub-region or 'region of interest' information from the video/image analyser 103. Furthermore in some embodiments the synthetic audio generator 201 can be configured to be coupled to an audio clip database 151. The audio clip database 151 can be any suitable database or linked audio signal database. For example the audio clip database 151 can, in some embodiments, be a database of audio clips stored on the Internet or within 'the cloud'. Furthermore in some embodiments the audio clip database 151 can be a database or collection of audio signals or links to audio signals stored within the memory of the apparatus.

With respect to Figure 6 an example of the synthetic audio generator 201 is shown in further detail. Furthermore with respect to Figure 10a flow diagram of the operations of the synthetic audio generator 201 according to some embodiments is shown.

In some embodiments the synthetic audio generator 201 comprises a feature/sub-region associator 301. The feature/sub region associator 301 is configured to receive an input from the video/image analyser 103.

The operation of receiving the feature/sub-region selection information is shown in Figure 10 by step 701.

The feature/sub region associator 301 can in some embodiments be configured to associate the received object, sub-region (or 'region of interest') selected by the video/image analyser with a feature. A feature can be any label or topic on which a relevant audio clip can be found (and then be used to generate a synthetic audio effect).

For example the user of the apparatus could capture with the camera video of a lush green forest scene with an elephant where the majority of the captured scene has greenery and the trunk of the elephant is the only moving part in the scene. In such an example the video/image analyser 103 can be configured to, and based on the image periodicity, select the elephant trunk as a suitable image or video object or sub-region due to the sub-regions periodicity.

The feature/sub region associator 301 can then in such an example be configured to associate or identify the selected object or sub-region of the elephant trunk with a feature of 'an elephant'.

The feature/sub region associator 301 in some embodiments can be configured to be automatic and identify the object or determine an association based on shape and/or motion recognition. For example a 'point and find' system can be used wherein the image object, sub-region or image is transmitted to a server which identifies the image object or sub-region. In other words the feature/sub region associator is implemented away from the apparatus.

The feature/sub region associator 301 in some embodiments can perform the sub region association or identification based on location or other sensor input assistance. For example where the image was taken in a zoo or elephant park the location of the zoo area/elephant park can be identified and the relevant feature determined and associated with the object or sub-region.

In some embodiments the feature/sub-region associator 301 can additionally receive a user input to enable a manual or semi-automatic feature association. For example with respect to the earlier example the object or sub-region indicated by the elephant's trunk can be associated by the user inputting the term 'elephant' when prompted to identify the object or sub-region. Furthermore in some embodiments the feature/sub-region associator can determine multiple suggested features based on the image and the user select one of the suggested feature list (the semi-automatic mode). For example using the earlier picture example the feature/sub-region associator could return (from either internal or external to the apparatus 'point and find' methods) a list of possible features for example 'elephant', 'grey snake', 'giant mouse' and the user select one of the possible features.

The associated feature identification can then be passed to a clip requester 303.

The operation of associating the feature with the object or sub-region is shown in Figure 10 by step 703.

In some embodiments the synthetic audio generator 201 comprises a clip requester 303. The clip requester 303 can in some embodiments be configured to receive the associated feature from the feature/sub-region associator 301. The clip requester 303 can then be configured to output to the audio database 151 an audio signal, audio clip or audio sample which is most like or contains the audio representation of the feature. Thus for example where the object or feature is identified as an elephant the clip requester 303 can request an elephant audio clip or audio signal/sample from the audio database 151.

The operation of requesting from the audio database a clip associated with the feature or identified object is shown in Figure 10 by step 705.

In some embodiments the synthetic audio generator 201 comprises a clip returner/clip selector 305. The clip returner/clip selector 305 is configured to receive from the audio database 151 suitable audio database audio clips or audio signals/samples associated with the feature or identified object. For example a series of audio clips or audio signals/samples for elephants can be returned from the audio database 151. In some embodiments the clip returner/clip selector 305 can be configured to present these example audio clip or audio signal/sample candidates and allow the user to select one of the example candidates, in other words the operation of selecting the audio clip is semi-automatic. In some embodiments the clip returner/strip selector 305 can be configured to select the clip automatically, for example selecting the audio clip or audio sample which has the greatest relevance.

The operation of returning an associated clip from the audio database is shown in Figure 10 by step 707.

The clip returner/clip selector 305 can in some embodiments output the selected audio clip to the audio clip embedder 205.

The operation of outputting an audio clip to the audio clip embedder 205 is shown in Figure 10 by step 709.

In such embodiments for example in crowded noisy places a photo or video image can be captured using the camera and the audio (for example the audio clip in the examples discussed is an elephant sound) added as a post-processing step. Furthermore in some embodiments for example it is possible that at the time when the picture or video was taken there was no sound and therefore the way to make a cinemagraph with audio is to post-process synthesize the audio by adding synthetic audio. In the embodiments described herein at the user should not need to open any separate applications or programs or spend hours generating the audio. For example the 'point and find' matching (in other words the associating and audio clip request and return operations) would in some embodiments be effectively instantaneous. As described herein the saving of the audio clip occurs after this and the user could undo the audio effect at some later point.

In some embodiments the audio clip generator 107 comprises an intrinsic audio signal analyser 203. The intrinsic audio signal analyser 203 can be configured to receive an audio signal input from a microphone or microphone array 171.

With respect to Figure 7 an example intrinsic audio signal analyser 203 according to some embodiments is shown. Furthermore with respect to Figure 11 the operation of the example intrinsic signal analyser 203 as shown in Figure 7 is described.

The microphone/microphone array 171 can in some embodiments be configured to be integral with the apparatus or in some embodiments to be separate from the apparatus. In such embodiments where the microphone/microphone array 171 is physically separate from the apparatus then the microphone/microphone array 171 can be configured to transmit the audio signals from the microphone or microphones to the apparatus and in particular the audio clip generator 107.

The operation of receiving the audio signals from the microphone/microphone array is shown in Figure 11 by step 801.

In some embodiments the intrinsic audio signal analyser 203 comprises an ambience detector 401.

The ambience detector 401 can be configured to receive the audio signals from the microphone/microphone array 171 and determine the ambient or surround audio components of the audio signals which represent the scene audio signals associated with the video being captured at the same time. For example in some embodiments the microphone array comprises two microphones configured to capture a stereo audio signal. However it would be understood that in some embodiments the audio can be multichannel or mono channel audio signals. The ambience detector 401 is in some embodiments configured to extract the dominant or directional components from the captured audio signals from the whole audio scene to return the surround audio components.

It would be understood that in some embodiments the ambience detector 401 can be configured to select a specific directional component rather than the ambience. For example in some embodiments where the region of interest is indicative of a specific regional component the ambience detector 401 can be configured to receive an input from the video/image analyser 103 and select the audio signals representing the identified direction of the object or sub-region.

The ambience detector 401 in some embodiments can detect for example audio signals from the environment surrounding the apparatus, for example the sound of wind blowing, sounds made by rain, the sound of ocean waves, or in general natural sounds. In some embodiments the ambience detector 401 is configured to apply a non-negative matrix factorisation on the input audio channel audio data.

For example the non-negative matrix factorisation can for example be summarised according to:

Let Xr and Xl be the left and right channel audio data. The first step in non-negative matrix factorisation in some embodiments is the computation of a covariance matrix C, given by 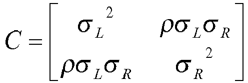 Where:-
σ L2:- Energy in the left channel
σ R2:- Energy in the right channel
p :- Cross-correlation coefficient across the two channels.

In some embodiments where the values of σ < 0, no NMF decomposition is performed - as it implies the left and right are correlated negatively and that can be treated as a surround signal.

In some embodiments where the values of p > 0, the dominant component from the signal can be estimated by a rank 1, non-negative maxtrix factorization of matrix C. This yields estimates the standard deviations σL and σR.

Further in some embodiments weights are computed based on the standard deviations of left and right channels as

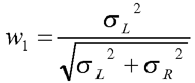

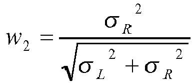

The weights obtained can in some embodiments be used to generate weighted sum and difference components to obtain the dominant and ambience components respectively.

The operation of determining the ambience from the audio signals by non-negative matrix factorisation is shown in Figure 11 by step 803.

The ambience detector 401 can in some embodiments be configured to output the ambience filtered audio signal to the audio clip embedder 205.

The operation of outputting the ambience signal to the embedder is shown in Figure 11 by step 805.

In some embodiments the audio clip generator 107 comprises an audio clip embedder 205. With respect to Figure 8 an example clip embedder 205 is shown. Furthermore with respect to Figure 12 the operation of the clip embedder 205 shown in Figure 8 is described herein.

The audio clip embedder 205 is configured to receive the audio clip audio signal generated from at least one of the synthetic audio generator 201 and the intrinsic audio signal analyser 203 and configure the audio signal in a manner such that the audio signal is in a format and form suitable for mixing and synchronising.

In some embodiments the audio clip embedder 205 comprises an audio flow model generator 501. The audio flow model generator 501 is configured to generate an audio flow model suitable for applying to the audio signal. The audio flow creation model can be configured to configured specific audio effects. For example the model can be configured to configure a simple switch or mixing operation (switching the audio clip on and off) to a more complex operation such as pitch or tempo changes in the audio signal.

In some embodiments the audio flow model generator 501 can be configured to determine that the audio clip should be output with a specific length of time, or a specific start and end time over a defined period. For example such as shown in Figure 15 the model for an ambient sound from the entire video sequence is such that the audio flow model is defined as outputting the audio signal over the whole of the animated period. In other words the audio flow model is to output the ambient audio clip of T seconds from time 0 to T seconds and loop the ambient audio clip. However in some embodiments the model generated can define that an audio signal is output for only a portion of the video sequence. In some embodiments the audio flow model generator can be configured to further define a suitable pitch or volume processing for the start and end of the audio signal clip such that when the audio signal is looped the end of one loop flows into the start of the next loop without any substantial discontinuities.

In other words in some embodiments the model can be configured to define a looping and a morphing of the audio signal such that the experienced audio signal is continuous and not discontinuous (having a pause, or sudden volume or pitch change as the audio signal loops).

In some embodiments the audio flow model generator can generate an audio flow model for each of the audio effects to be output. For example an ambient audio clip could be employed over the whole length of the image/video time period with a synthetic audio clip to be employed only over a portion of the whole length.

The generation of the audio flow model is shown in Figure 12 by step 901.

The audio flow model generator 501 can be configured to output the audio flow model to an audio flow processor 503.

In some embodiments the audio clip embedder 205 can comprise an audio flow processor 503. The audio flow processor 503 can be configured to receive from the synthetic audio generator 201 or the intrinsic audio signal analyser 203 (or both) the audio signals to be flow processed. In other words the model generated by the audio flow model generator 501 is applied to generate an output audio signal based on the model. In other words the audio signals can be selected, filtered, switched, mixed according to any suitable manner such that the model is followed.

The receiving the audio signal to be embedded is shown in Figure 12 by step 903.

The operation of applying the flow model to the audio signal is shown in Figure 12 by step 905.

The audio flow processor 503 can be configured in some embodiments to output the audio signal to the mixer and synchroniser 109.

The operation of outputting the flow processed audio signal to the mixer and synchroniser is shown in figure 12 by step 907.

The operation of an example mixer and synchroniser is shown is with respect to Figure 13.

The mixer and synchroniser 109 in some embodiments can be configured to receive the video data.

The operation of receiving the video data is shown in Figure 13 by step 1001.

Furthermore the mixer and synchroniser 109 can be configured to receive the audio data from the audio clip generator 107.

The operation of receiving the audio data is shown in Figure 13 by step 1003.

The mixer and synchroniser 109 can in some embodiments synchronise or associate the audio data with the video data. For example in some embodiments such as shown in Figure 15 the video has two regions of interest where a meaningful periodicity is centred at pixel X₁,Y₁ of length two seconds around t₁ which generates an animated video sub region 1401 and a second meaningful periodicity centred at pixel X₂,Y₂ of length two seconds around time t₂ is shown in the video sequence 1403 where the length of captured video T has an ambient sound from the entire video sequence to be used for looping. The ambient sound, having been embedded (processed) according to the audio flow model to generate an ambient sound sequence 1405. The mixer and synchroniser can be configured to synchronise the audio signal to the image and the image animation. For example as shown in Figure 15 the audio signal or clip can be synchronised at the start of the video or sound loop 1405.

In some embodiments the mixer and synchroniser 109 can then be configured to mix or multiplex the data to form a cinemagraph or animated image metadata file comprising both image or video data and audio signal data. In some embodiments this mixing or multiplexing of data can generate a file comprising at least some of: video data, audio data, sub region identification data and time synchronisation data according to any suitable format. The mixer and synchroniser 109 can in some embodiments output the metadata or file output data.

It shall be appreciated that the term user equipment is intended to cover any suitable type of wireless user equipment, such as mobile telephones, portable data processing devices or portable web browsers. Furthermore, it will be understood that the term acoustic sound channels is intended to cover sound outlets, channels and cavities, and that such sound channels may be formed integrally with the transducer, or as part of the mechanical integration of the transducer with the device.

In general, the design of various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The design of embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory used in the design of embodiments of the application may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the inventions may be designed by various components such as integrated circuit modules.

As used in this application, the term 'circuitry' refers to all of the following:
(a) hardware-only circuit implementations (such as implementations in only analog and/or digital circuitry) and
(b) to combinations of circuits and software (and/or firmware), such as: (i) to a combination of processor(s) or (ii) to portions of processor(s)/software (including digital signal processor(s)), software, and memory(ies) that work together to cause an apparatus, such as a mobile phone or server, to perform various functions and
(c) to circuits, such as a microprocessor(s) or a portion of a microprocessor(s), that require software or firmware for operation, even if the software or firmware is not physically present.

This definition of 'circuitry' applies to all uses of this term in this application, including any claims. As a further example, as used in this application, the term 'circuitry' would also cover an implementation of merely a processor (or multiple processors) or portion of a processor and its (or their) accompanying software and/or firmware. The term 'circuitry' would also cover, for example and if applicable to the particular claim element, a baseband integrated circuit or applications processor integrated circuit for a mobile phone or similar integrated circuit in server, a cellular network device, or other network device.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. An apparatus comprising:
means for analysing at least two images to determine at least one object mutual to the at least two images, the object having a periodicity of motion;
means for generating an animated image based on the at least two images, wherein the at least one object is animated;
means for determining at least one audio signal associated with the at least one object; and
means for combining the at least one audio signal with the animated image to generate an audio enabled animated image.

2. The apparatus as claimed in claim 1, wherein the means for determining the at least one audio signal associated with the at least one object comprises:
means for receiving the at least one audio signal; and
means for filtering the at least one audio signal.

3. The apparatus as claimed in claim 2, wherein the means for receiving the at least one audio signal comprises:
means for receiving at least a portion of the at least one audio signal from at least one microphone at substantially the same time as the captured at least two images.

4. The apparatus as claimed in any of claims 2 or 3, the means for filtering the at least one audio signal comprises at least one of:
means for determining at least one foreground sound source of the at least one audio signal;
means for filtering the at least one audio signal to remove the at least one foreground sound source from the at least one audio signal to generate an ambience audio signal as the at least one audio signal; and
means for filtering the at least one audio signal to extract the at least one foreground sound source from the at least one audio signal to generate a dominant sound component as the at least one audio signal.

5. The apparatus as claimed in any of previous claim, wherein the means for determining the at least one audio signal associated with the at least one object comprises:
means for receiving an indication of the at least one object mutual to the at least two images;
means for identifying the at least one object mutual to the at least two images; and
means for generating the at least one audio signal based on the identified object.

6. The apparatus as claimed in claim 5, wherein the means for identifying the at least one object comprises:
means for determining a location associated with the at least two images;
means for identifying the at least one object based on the location of the at least two images;
means for selecting the at least one object.

7. The apparatus as claimed in any of claims 5 or 6, wherein the means for identifying the at least one object comprises:
means for pattern recognition analysing the at least one object mutual to the at least two images.

8. The apparatus as claimed in any previous claim, wherein the means for determining the at least one audio signal associated with the at least one object comprises at least one of:
means for receiving the at least one audio signal from an external audio database;
means for receiving the at least one audio signal from an internal audio database;
means for receiving the at least one audio signal from a memory; and
means for synthesising the at least one audio signal.

9. The apparatus as claimed in any of claims 2 to 8, wherein the means for receiving the at least one audio signal further comprises:
means for generating an audio flow model to control a presentation of the at least one audio signal; and
means for processing the at least one audio signal using the audio flow model.

10. The apparatus as claimed in claim 9, wherein the means for generating the audio flow model comprises:
means for determining an audio signal process;
means for determining an audio signal volume;
means for determining an audio signal playback speed;
means for determining an audio signal repetition periodicity;
means for determining an audio signal start time; and
means for determining an audio signal end time.

11. The apparatus as claimed in any previous claim, further comprising:
means for time synchronising the at least one audio signal with the animated image to generate a synchronised audio enabled animated image.

12. The apparatus as claimed in any previous claim, wherein the means for analysing the at least two images to determine the at least one object mutual to the at least two images further comprises:
means for receiving the at least two images from an image source;
means for outputting the at least two images on a display; and
means for receiving at least one user input determining the at least one object mutual to the at least two images.

13. The apparatus as claimed in any previous claim, wherein the means for analysing the at least two images to determine the at least one object mutual to the at least two images further comprises:
means for correlating the at least two images to determine at least one candidate object, the at least one candidate object being mutual to the at least two images and having a periodicity of motion; and
means for selecting the at least one candidate object as the at least one object.

14. An electronic device comprising the apparatus of claims 1 to 13.

15. A method comprising:
analysing at least two images to determine at least one object mutual to the at least two images, the object having a periodicity of motion;
generating an animated image based on the at least two images, wherein the at least one object is animated;
determining at least one audio signal associated with the at least one object; and
combining the at least one audio signal with the animated image to generate an audio enabled animated image.
